Europäisches Patentamt

European Patent Office

Office européen des brevets

(19)

(11) Veröffentlichungsnummer: **0 234 205**
**B1**

(12)
# EUROPÄISCHE PATENTSCHRIFT

(45) Veröffentlichungstag der Patentschrift:
13.06.90

(51) Int. Cl.⁵: **C08J 3/22**, C08L 21/00,
C08K 3/06

(21) Anmeldenummer: 87100234.1

(22) Anmeldetag: 10.01.87

(54) Verfahren zum Herstellen einer Elastomeren-Vormischung und danach erhaltene Vormischung.

(30) Priorität: 13.01.86 DE 3600701

(43) Veröffentlichungstag der Anmeldung:
02.09.87 Patentblatt 87/36

(45) Bekanntmachung des Hinweises auf die Patenterteilung:
13.06.90 Patentblatt 90/24

(84) Benannte Vertragsstaaten:
AT BE DE FR GB IT LU NL SE

(56) Entgegenhaltungen:
EP-A- 0 170 104
LU-A- 33 140

CHEMICAL ABSTRACTS, Band 97, Nr. 20, 15.
November 1982, Seite 67, Zusammenfassung
Nr. 164355y, Columbus, Ohio, US

(73) Patentinhaber: UNIROYAL ENGLEBERT Reifen GmbH,
Hüttenstrasse 7, D-5100 Aachen(DE)

(72) Erfinder: Fuchs, Hans-Bernd, Dr. Dipl. Chem.,
Leverkusener Strasse 12, D-4370 Marl(DE)
Erfinder: Grosch, Karl Alfred, Dr. phil., Uelenbender
Weg 22, D-5106 Roetgen(DE)

**Beschreibung**

Die Erfindung betrifft eine Elastomeres und unlöslichen Schwefel enthaltende Vor- oder Grundmischung für vernetzungs- oder vulkanisierfähige Schwefelvulkanisationselastomermischungen und ein Verfahren zu deren Herstellung. Nach dem Verfahren zum Herstellen einer aus einem oder mehreren Elastomeren und unlöslichem Schwefel in Pulverform bestehenden Vor- oder Grundmischung werden das Elastomere und der feinpulverige Schwefel unter bestimmten, wählbaren Temperaturbedingungen gemischt, wobei der unlösliche Schwefel in das Elastomere dispergiert wird und der Schwefel feinverteilt im Elastomeren vorliegt. Dieser Mischung wird Prozeßöl zugemischt.

Der Dispersionsgrad des Vulkanisiermittels Schwefel in einer vernetzungs- bzw. vulkanisationsfähigen Elastomermischung, insbesondere einer Kautschukmischung, ist mitentscheidend für die Qualität des späteren Gummiprodukts im Hinblick auf dessen physikalische Eigenschaften. Als Vulkanisationsmittel wird unlöslicher Schwefel, das ist polymerisierter Schwefel, der in Schwefelkohlenstoff nicht löslich ist, dem elementaren Schwefel vorgezogen. Letzterer besitzt eine von der Temperatur abhängige Löslichkeit. Da in den bei höheren Temperaturen hergestellten Schwefelkautschukmischungen unerwünschte Schwefelausscheidungen nach dem Abkühlen der Mischungen entstehen, wird unlöslicher Schwefel bevorzugt. Bei Verwendung von unslöslichem Schwefel ist dieser Nachteil nicht vorhanden, sofern der Schwefel in homogener Verteilung in der Vulkanisationsmischung vorliegt. Da der unlösliche Schwefel in der Form eines feinen Pulvers vorliegt, ist hierbei die Verteilung jedoch um so schwieriger, je höher der Reinheitsgrad sowie der Kristallisationsgrad und die thermische Stabilität des unlöslichen Schwefels sind.

Die Schwefelverteilung des unlöslichen Schwefels in bekannten, hoch dosierten Schwefelvulkanisationsmischungen, wie sie zum Zwecke hoher Haftung beispielsweise zwischen vermessingtem Stahlkord und Gummi verwendet werden, ist verhältnismäßig ungünstig, weil die Dispergierbarkeit mangelhaft ist, wenn große Mischungsmengen vorliegen.

Eine Verbesserung in der Verteilung des unlöslichen Schwefels ist wegen des begrenzt thermisch belastbaren unlöslichen Schwefels sehr schwierig. Schwefel-Vormischungen sollen daher nach dem Ziel der Erfindung eine ideale Vorverteilung des unlöslichen Schwefels im Elastomeren aufweisen. Nach der technischen Aufgabe der Erfindung soll bei der Herstellung der Schwefelvormischung in einem Temperaturbereich gearbeitet werden, der genügend unterhalb der Umwandlungstemperatur vom unlöslichen in den löslichen Schwefel liegt. Diese Umwandlungstemperatur liegt bei 100°C. Die Umwandlung selbst ist ein zeitabhängiger Prozeß. Die Herstellung der Schwefelvormischung soll des weiteren technisch einfach und wirtschaftlich sein. Es soll ein gut verarbeitungsfähiges, riesel- bzw. leicht schüttfähiges Pulver als Schwefelvormischung erhalten werden, das die Nachteile der bekannten Vormischung nicht aufweist und im Gegenteil zu dieser die Qualität einer vernetzungsfähigen bzw. vulkanisationsfähigen Schwefel/Elastomermischung verbessert. Die Herstellung soll nicht auf Vormischungen beschränkt sein, sondern auch verbesserte Fertigmischungen erfassen. Für diese ist auch maßgebend, daß gleichbleibende Qualitäten für großtechnische Anwendungen erhalten werden, wobei insbesondere die bisher üblichen Schwankungen vermieden werden.

Die Aufgabe wird erfindungsgemäß dadurch gelöst, daß eine Chemikalienvormischung aus an sich bekanntem Pulverkautschuk und unlöslichem Schwefel in Pulverform durch Verquirlen bei Raumtemperatur erhalten wird. Diese Vormischung weist eine ideale Vorverteilung des unlöslichen Schwefels im Pulverkautschuk auf, ist gut schütt- und rieselfähig und weist den Vorteil auf, daß ein danach hergestelltes Kautschukmischungsmaterial in Fellform auf Dauer von mehreren Wochen gelagert keine Ausblüherscheinungen zeigt. Damit aus dieser idealen Schwefel/Pulverkautschukvormischung ein gebrauchsfähiges Kautschukmischungsfell erhalten wird, das durch Kompaktieren beispielsweise auf Kaltwalzwerken erzeugt wird, wird dem durch Verquirlen bei Raumtemperatur erhaltenen Gemisch aus unlöslichem Schwefel und Pulverkautschuk ein Prozeßöl ebenfalls bei Raumtemperatur hinzugerührt. Dieses Öl erleichtert den Kompaktierungsvorgang, auch unter Temperaturaspekten, und ermöglicht die Einstellung einer gewünschten Mooney-Viskosität. Die Herstellung der Vormischung bei Raumtemperatur durch Verquirlen wie auch das Hinzurühren des Prozeßöls erfolgen im wesentlichen ohne Energiezufuhr zu den Bestandteilen der Vormischung. Die Herstellung kann bevorzugt in einem Pulvermischer erfolgen.

Auch nach dem Einarbeiten des Prozeßöls ist die Vormischung weiter schütt- und rieselfähig. Beim Herstellen eines Kautschukmischungsfells wird durch das Kompaktieren die Schwefelvormischung erwärmt.

Die Temperatur kann jedoch problemlos unterhalb des Temperaturbereichs von 70°C gehalten werden.

Dadurch ist auch bei der Verarbeitung zum Kautschukfell die Umwandlungstemperatur des ungelösten Schwefels zum gelösten Schwefel von 30°C und mehr unterhalb der kritischen Temperatur problemlos einzuhalten. Ein solches Fell zeigt auch nach einigen Wochen der Lagerung keine Ausblühanzeichen durch Schwefel.

Ein weiterer Vorteil des Herstellungsverfahrens der neuen Schwefelvormischung ist darin zu sehen, daß die Viskosität der Vulkanisationsmischung nach Bedarf einstellbar ist, indem jeweils ein geeigneter bestimmter, wählbarer, handelsüblicher Pulverkautschuk mit dem unlöslichen Schwefel in geeigneter Pulverform verquirlt wird.

Nach einer bevorzugten Rezeptur für eine Schwefelvormischung werden bei Raumtemperatur im Pulvermischer verquirlt:

ein Pulverkautschuk des Typs BT 7380 mit 170 Teilen pphr

unlöslicher Schwefel des Typs Crystex N mit 100 Teilen pphr
aromatisches Öl mit 50 Teilen pphr.

Anstelle des Aromatenöls kann dem Vormischungspulver ein nicht aromatisches Prozeßöl eingerührt werden. Der genannte Pulverkautschuk ist ein rußhaltiger SBR-Pulverkautschuk, der in DE-PS 2 822 148 beschrieben ist.

Nach einer weiteren bevorzugten Rezeptur für eine Schwefelvormischung werden bei Raumtemperatur verquirlt:
ein Pulverkautschuk des Typs BT 4570 mit 170 Teilen pphr
unlöslicher Schwefel des Typs Crystex N mit 100 Teilen pphr
aromatisches Öl mit 50 Teilen pphr,
wobei der Pulverkautschuk und der unlösliche Schwefel in Pulverform bei Raumtemperatur im Pulvermischer verquirlt werden und das Prozeßöl ebenfalls bei Raumtemperatur hinzugerührt wird. Auch hierdurch wird eine rieselfähige Schwefelvormischung erhalten. Die Gesamtdauer des Verquirlens und Einrührens beträgt zwei bis drei Minuten. Das so erhaltene, ideal vorgemischte Schwefel/Elastomer-Pulver wird anschließend auf einem Kaltwalzwerk homogenisiert und als Kautschukmischungsfell ausgezogen.

Im Fall der beschriebenen Herstellung der Schwefelvormischung gilt diese als hochgefüllte Elastomervulkanisationsmischung. Die Dispergierung der Chemikalien erfolgt bei Raumtemperatur und ist insbesondere für die homogene Feinverteilung des thermisch begrenzt belastbaren unlöslichen Schwefels wegen der idealen Verteilung von ausschlaggebender Bedeutung für die Qualität des vernetzten bzw. vulkanisierten Elastomers.

An Beispielen wird die Erfindung erläutert:

Beispiel 1:

100 phr Anteile unlöslicher Schwefel Crystex N wurden mit 170 phr Anteilen Pulverkautschuk BT 7380 und 50 phr Anteilen Aromatenöl bei Raumtemperatur zweieinhalb Minuten lang im Pulververmischer verquirlt. Es stellte sich eine Viskosität nach Mooney von ungefähr 65° ein. Das Schwefelvormischungsprodukt war feinpulverig, gut rieselfähig und der Schwefel ideal vorverteilt. Die thermische Stabilität des Crystex N war nicht beeinträchtigt.

Beispiel 2:

100 phr Anteile unlöslicher Schwefel Crystex N wurden mit 170 phr Anteilen Pulverkautschuk BT 4570 und 50 phr Anteilen Aromatenöl bei Raumtemperatur zweieinhalb Minuten lang im Pulvermischer verquirlt. Es stellte sich eine Viskosität nach Mooney von annähernd 50° ein. Das Schwefelvormischungsprodukt war feinpulverig, gut schütt- und rieselfähig und der Schwefel war ideal vorverteilt. Die thermische Stabilität des Crystex N war nicht beeinträchtigt. Die Herstellung der Schwefelvormischung erfolgte in einem 100 l Pulvermischer. Diese Schwefel/Pulverkautschuk-Vormischung wurde auf einem Kaltwalzwerk bei Raumtemperatur kompaktiert. Die Betriebstemperatur des Felles erreichte 60°C. Nach einer Lagerung von vier Wochen war ein schwacher Grauschimmer an der Oberfläche des Fells erkennbar.

## Patentansprüche

1. Verfahren zum Herstellen einer unlöslichen Schwefel enthaltenden, aus Schwefel, Elastomerem und Prozeßöl bestehenden Schwefelvormischung, bei der der Schwefel und das Elastomere bei einer bestimmten, unterhalb der Umwandlungstemperatur des unlöslichen Schwefels liegenden Temperatur zusammen gemischt werden, wobei der unlösliche Schwefel in das Elastomere dispergiert wird und der Schwefel vorverteilt vorliegt und das Prozeßöl eingerührt wird, dadurch gekennzeichnet, daß aus unlöslichem Schwefel und einem bestimmten, jedoch wählbaren, an sich bekannten Pulverkautschuk eine Schwefelvormischung durch Verquirlen bei Raumtemperatur erhalten wird.

2. Chemikalienvor- oder -grundmischung, bestehend aus Elastomerem, insbesondere Kautschuk, Vulkanisationsmittel und Prozeßöl, hergestellt nach Anspruch 1, gekennzeichnet durch eine homogene pulverige Mischung aus Ruß enthaltendem Pulverkautschuk, Vulkanisationsmittel und Prozeßöl, in der das Vulkanisationsmittel ideal verteilt zum Elastomeren vorliegt.

## Claims

1. A process for the production of an insoluble sulphur-containing premixture containing sulphur, elastomer and process oil in which the sulphur and the elastomer are mixed together at a specific temperature below the transition temperature of the insoluble sulphur, in which the insoluble sulphur is dispersed in the elastomer and the sulphur has first been predistributed and the process oil has been mixed in, characterised in that a sulphur premixture is obtained from insoluble sulphur and a particular but selectable known powdered rubber by agitation at room temperature.

2. A chemical premixture or basic mixture consisting of elastomer, in particular rubber, vulcanising agent and process oil, produced in accordance with claim 1, characterised by a homogeneous powder mixture of powdered rubber containing carbon black, vulcanising agent and process oil in which the vulcanising agent is ideally distributed within the elastomer.

## Revendications

1. Procédé pour fabriquer un prémelange contenant du soufre insoluble et constitué par du soufre, élastomère et huile de traitement, et selon lequel on mélange le soufre et l'élastomère a une température déterminée inférieure a la température de transformation du soufre insoluble, et selon lequel on disperse le soufre insoluble dans l'élastomère, le soufre est present a l'état préalablement réparti et on introduit l'huile de traitement en réalisant une agitation, caractérise en ce qu'à partir de soufre inso-

luble et d'un caoutchouc a l'état de poudre connu en soi, déterminé, mais pouvant être choisi, on obtient un prémelange contenant du soufre par mélange avec agitation à la temperature ambiante.

2. Prémélange ou mélange de base de produits chimiques, constitué par un élastomère, notamment du caoutchouc, un agent de vulcanisation et une huile de traitement, fabriqué selon la revendication 1 caractérisé par un mélange pulvérulent homogène de caoutchouc a l'état de poudre, contenant de la suie, d'un agent de vulcanisation est réparti de façon idéale par rapport a l'élastomère.